# EUROPEAN PATENT SPECIFICATION

(11) **EP 3 131 207 B1**
(45) Date of publication and mention of the grant of the patent: **19.08.2020**
(21) Application number: 15736314.4
(22) Date of filing: 01.04.2015
(51) Int. Cl.: H04B 5/00, B60R 25/24, G07C 9/00

(54) **VEHICLE CONTROL SYSTEM HAVING SMART PHONE, AND CONTROL METHOD**
FAHRZEUGSTEUERUNGSSYSTEM MIT EINEM SMARTPHONE UND STEUERUNGSVERFAHREN
SYSTÈME DE COMMANDE DE VÉHICULE COMPRENANT UN TÉLÉPHONE INTELLIGENT, ET PROCÉDÉ DE COMMANDE

(30) Priority: 09.04.2014 CN 201410140599
(43) Date of publication of application: 15.02.2017
(73) Proprietor: HELLA GmbH & Co. KGaA, 59552 Lippstadt (DE)
(72) Inventor: FRÜHLING, Dietmar, 26639 Wiesmor (DE); TOVAR, Jörg, 26316 Varel (DE)
(74) Representative: DTS Patent- und Rechtsanwälte Schnekenbühl und Partner mbB
(86) International application number: PCT/IB2015/000861
(87) International publication number: WO 2015/155604

(56) References cited:
- EP-A1- 1 867 536
- US-A1- 2006 232 437
- US-A1- 2007 109 101
- US-A1- 2007 135 112
- US-A1- 2013 068 842
- US-A1- 2013 234 827
- US-A1- 2014 058 586

## Description

The invention relates to a control system with the smart phone and control method for operating the control system.

Among the methods of controlling vehicles, the access of vehicle and start of motors is normally implemented by remote terminals with appropriate channels such as GSM, Bluetooth, W-LAN and NFC (Near Field Communication). A authorized process is existed during the communication with control system for remote terminals considering the safety performance. That means the vehicle control unit verifies the features of signals sent by vehicle control terminal to decide whether to follow the instructions. However, the wireless network of remote control terminals such as smart phones is open which cannot satisfy the safety requirement.

Therefore, the signals are normally encrypted by SIM card or additional safety chip. The encryption method will cause problems like the communications carriers manages the encryption method of SIM card. For example, the encryption method of the SIM card provided by CMCC is managed by CMCC. When users use the SIM card to encrypt the signals, they have to contact the carriers to obtain relative code and encryption method. Further, several queries are required for different phones which lead to inconvenience. The same problems occur when using additional safety chip. Users have to send the queries to the manufactures which are a third party to get specific IDs to encrypt signals. This process delay phones controlling the vehicles.

The encryption method is unavailable when battery runs out. Users have no way but use normal control method to control the vehicles instead.

Therefore, a new third party encryption structure is required to optimize the encryption method and be available no matter battery runs out or not.

The US 2007/135112 A1 discloses a smart phone comprising NFC antenna and signal-send unit communicating with the NFC antenna. The smart phone further comprises an NFC tag which is assembled with the smart phone. The NFC tag contains identification information and communicates with the NFC antenna of the smart phone to send the identification information to the NFC antenna. The NFC antenna is configured to transfer the identification information to the signal-send unit so that the signal sent by the signal-send unit contains the identification information through long range communication method. The identification information comprises the ID or encryption information of the NFC tag.

The US 2014/058586 A1 discloses a control system comprising an ECU positioned in the vehicle and controlling the vehicle according to the received signal sent by the signal-send unit.

The present invention relates to a vehicle control system with the smart phone. The safety of communication between smart phones and vehicle is guaranteed when optimize the encryption method. And the application scope is expanded during any stage.

The present invention discloses a control system with a smart phone for a vehicle, the smart phone comprising NFC antenna and signal-send unit communicating with the NFC antenna, the control system comprising an ECU positioned in the vehicle and controlling the vehicle according to the received signal sent by the signal-send unit, wherein the smart phone further comprises an NFC tag which is assembled with the smart phone; the NFC tag contains identification information; the NFC tag communicates with the NFC antenna to send the identification information to the NFC antenna; the NFC antenna is configured to transfer the identification information to the signal-send unit so that the signal sent by the signal-send unit contains the identification information through long range communication method. The identification information comprises the ID or encryption information of the NFC tag.

Preferably, the identification information comprises the ID and encryption information.

Preferably, the smart phone further comprises an encrypted data storage encrypting the encryption information by AES.

Preferably, the NFC tag is positioned in one of several places including: sticking onto the smart phone; integrated in the housing of the smart phone; on the battery of the smart phone; on a detachable protective shell cover.
Preferably, a broken structure is provided on the NFC tag; when the NFC tag is taken out of the smart phone, the structure is broken to ensure that the broken NFC tag cannot be reused.

Preferably, a switch is provided on the NFC tag to activate or deactivate the NFC tag.

Preferably, the NFC tag stores the IMEI of the smart phone so that the NFC tag is activated only when the IMEI matches.

Preferably, the ECU communicates with the smart phone by GSM, Bluetooth or W-LAN.

Preferably, the NFC tag comprising a mark of manufacture of the smart phone.

Preferably, the ECU comprises a transceiver module to communicate with the smart phone.

Preferably, the ECU sends a challenge to the smart phone; the NFC tag sends a response corresponding to the challenge to the signal-send unit; the signal-send unit sends the response to the ECU to verify the identification information.

Preferably, the smart phone further comprises a signal receive unit for relaying the challenge to the NFC tag.

Preferably, the control system further comprises an NFC base positioned on the vehicle to communicate with the ECU so as to transfer the received signal to the ECU; the NFC tag communicates with the NFC base to send the signal to the NFC base.

Preferably, the NFC base is positioned in the handle, B column or windshield.

Preferably, a LF radio interface is provided on the NFC tag to determine the position of the NFC corresponding to the vehicle.

Preferably, the LF radio interface is powered by the NFC antenna.

Preferably, the smart phone shows the conditions of the vehicle according to the signal sent by the ECU.

Preferably, the ECU stores the identification information and encryption information of the NFC tag to identify the effective NFC tag.

The present invention also discloses a control method for operating the above defined control system, said control method comprising the following steps: the smart phone communicates with the NFC tag by NFC antenna to obtain the identification information; the NFC antenna transfers the identification information to the signal-send unit; the signal-send unit communicates with the ECU to send a signal containing the identification information to ECU.

Preferably, the control method comprises of the following steps: ECU sends a challenge to the smart phone; the smart phone relays the challenge to the NFC tag; the NFC tag sends a response corresponding to the challenge to the smart phone; the smart phone relays the response to ECU; the ECU executes the operation when the response is verified.

Preferably, the control method comprises the following step: the smart phone sends an inquiry to the ECU.

Preferably, the NFC tag integrates the ID of the NFC tag into the response.

After adopting the technical solutions, the NFC tag provide identification information with the smart phone and the identification information is sent together with the control signals of smart phone which encrypt the control signals. Vehicles or other external devices will verify the identification information. Since the identification information of NFC tag is stored in the NFC tag and the NFC antenna has obtained the ID when communicating with NFC tag, a third party is unnecessary. Otherwise, when the battery of smart phone runs out, users can make the NFC tag communicate with the vehicles with NFC base directly to send control signals which assure that operation can be done at any time.

The invention is described in greater detail below by reference to preferred embodiments which are illustrated in the attached drawings in which:
Figure 1 shows a schematic diagram of the structure of smart phones with NFC tag;
Figure 2 shows a schematic diagram of the vehicle control system with the smart phone;
Figure 3 shows a schematic diagram of the vehicle control system in one embodiment;
Figure 4 shows a operative diagram of the vehicle control system;
Reference number: 1-smart phone, 2-NFC tag.

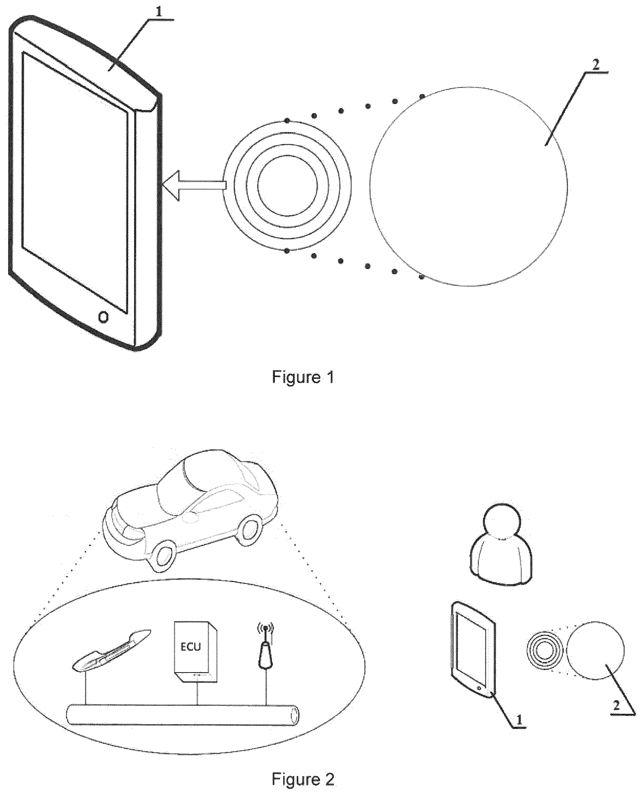

Figure 1 shows a a schematic diagram of the structure of smart phones with NFC tag. The smart phone 1 in present invention include NFC antenna and signal-send unit. The NFC antenna here refers to an antenna or base which make smart phone 1 posses NFC function. Nowadays more and more smart phones 1 are provided with NFC antenna which is arranged on the shell of the smart phones 1 or assembled with battery. The signal-send unit is a communication module that communicates with external devices through long range communication method such as GSM transmission, Bluetooth transmission, W-LAN transmission or NFC. The signal-send unit it normally arranged inside the smart phones 1. The NFC antenna communicates with the signal-send unit and the signal-send unit sends the information received from NFC antenna to external devices. In present invention, the smart phone 1 further comprises a NFC tag 2 which is assembled with the smart phone 1, i.e. the NFC tag 2 is enclosed on the smart phone 1 or attached with the smart phone 1 by any kind of connection element to make the NFC tag become a part of the smart phone 1. The NFC tag contains identification information which is stored in the NFC tag 2. Users can take the NFC tag 2 close to the NFC antenna so as to make NFC tag 2 and NFC antenna communicate with each other by NFC mode. The NFC antenna reads the identification information of the NFC tag 2 to complete the process of sending information from the NFC tag 2 to the NFC antenna. After receiving the identification information, the NFC antenna transfer it to the signal-send unit to make the signals sent by the signal-send unit possess the identification information. Hence, the identification information is regarded as the identification feature and encryption information of the signals sent by smart phone 1. The external devices receive and verify the signals to achieve the technical effect that signals sent by signal-send unit are encrypted.

The working principle of the NFC tag 2 in prior art is totally different from present invention. It can be seen that nowadays people skilled in art arrange and use NFC tag 2 in following ways. A NFC tag 2 is arranged on the surface of a phone. When the NFC antenna of the smart phone 1 sweeps a NFC tag 2, the NFC tag 2 record the settings or applications of the smart phone 1. After that, when the smart phone 1 sweeps the NFC tag 2 again, the smart phone 1 will turn its settings to the recorded ones. All above shows that the use of NFC tag 2 in prior art is different from that of present invention. The NFC tag 2 in present invention serves as a media providing identification information and is arranged inside the smart phone 1 so that users can take the NFC tag 2 portably.

The identification described herein comprises the ID or encryption information of the NFC tag 2. That means, the NFC antenna can obtain the ID and code of the NFC tag 2 after the NFC antenna communicates with the NFC tag 2. The ID of NFC tag 2 is stored in the NFC tag 2 when the manufacturer of NFC tag 2 produce the NFC tag 2 like the MAC address of a laptop. The ID is unique and easy to be verified. The code can be optionally set in the application of the smart phone 1. Only when users input a right code, will the smart phone 1 send control signals to vehicles. In particular, the encryption information can be codes encrypted by AES. When the smart phone 1 needs to exchange important data with external devices, the data can be encrypted by AES. An encrypted data storage is provided in the smart phone 1. The encrypted data storage encrypted the data based on AES. It is known to people skilled in art that applications in smart phone can replace the encrypted data storage to encrypt the data.

Optionally, the International Mobile Equipment Identity (IMEI) of the smart phone 1 can be stored in the NFC tag 2. The IMEI serves as the match standard with the NFC tag 2. Except that the ID of NFC tag 2 is verified, the IMEI will also be checked. In particular, the NFC tag 2 stores the IMEI. Only when the IMEI of a smart phone 1 matches the stored IMEI, will the NFC tag 2 be activated which improves the safety.

The NFC tag 2 can be arranged on the following positions in embodiments of present invention. The NFC tag 2 is pasted on the smart phone 1 or its shell and exposed outside so that users can replace it conveniently; the NFC tag 2 is assembled inside the shell of smart phone 1 such as it is pasted on the inner surface of the shell so that the manufacturer of smart phones finish arranging the NFC tag 2 during manufacture; the NFC tag 2 is arranged on the battery of smart phone 1 to get close to the NFC antenna and ensure the smart phone 1 identify the NFC tag 2; the NFC tag 2 is assembled on a removable protection shell. As known to all, a protection shell is often used to protect the smart phone 1. The protection shell can be applied to enclose the NFC tag 2.

In one embodiment, considering other users will take out the NFC tag 2 of a smart phone 1 which will cause safety problems, a broken structure is arranged on the NFC tag 2. When the NFC tag 2 needs to be removed, the broken structure will be the stress point which cause the broken structure ruptured. The NFC tag 2 is broken and can not be used again so that one NFC tag 2 can only be used for one user.

Similarly, in order to improve the application of NFC tag 2, a switch is provided on the NFC tag 2 to activate or inactivate the NFC tag 2. When the NFC tag 2 is not using, the switch close the NFC tag 2 to avoid other NFC antennas of other smart phones 1 read the ID of the NFC tag 2. The safety is further improved.

In another embodiment, the NFC tag 2 comprises the manufacturer tag. For example, when the NFC tag 2 is enclosed on the smart phone 1, the manufacturer such as iPhone, SAMSUNG, Nokia can be designed on the NFC tag 2 so that the overall structure of the smart phone 1 will not be affected.

The smart phone 1 of any one embodiment above apply the identification information of the NFC tag 2 to send signals out. As a third party, the NFC tag 2 is assembled with the smart phone. Users can switch on or switch off the NFC tag 2. There is no need to ask the third party for an ID which is easier than encryption method of prior art.

The present invention further discloses a vehicle control system with smart phone 1 described herein. Figure 2 shows a system schematic diagram. The external devices are vehicles in above embodiments. In order to establish the communication between vehicles and smart phone 1, an ECU is provided in the vehicles which is positioned inside the vehicles. The ECU receive signals sent from smart phone 1 and control the vehicles according to the instruction contained in the signals. In this embodiment, the communication between the smart phone 1 and ECU is normally established by GSM, Bluetooth, W-LAN, etc.

In on embodiment, ECU comprise a receive-send module for receiving signals sent from smart phone 1 and sending signals to the smart phone 1(if necessary). Different from prior art, since the smart phones 1 possess a NFC tag 2, signals sent from the smart phones 1 possess identification information of the NFC tag 2. The receive-send module store the identification information of a correctly connected NFC tag 2 to verify whether ECU is connected with a right smart phone 1 so that the communication between ECU and smart phone 1 is a closed network and external devices are inaccessible to the network. The technical effect is quite important in control system. If the communication between vehicles and external control terminal(smart phone 1) is an open network, it means all the control terminals connected with the ECU can send instructions like open switches, close switches and start which is unsafe for users. Therefore it is necessary to apply control system described herein to encrypt the signals to assure that only the right user use the right control terminal to control the right vehicle.

In order to assist ECU to verify whether signals sent from smart phone 1 with identification information of NFC tag 2 is identical with the right identification information, ECU challenges the smart phone 1 after receiving the signals. The challenges in present invention refers to ECU sends a confirmation to the smart phone to confirm whether the smart phone is a correct terminal after receiving the signals and identification information. The challenge will be describes in detail below. Based on the challenge, the NFC tag 2 will send a response information to the signal-send unit. The signal-send unit will transfer the response to ECU to verify the identification information.

In one preferable embodiment, a signal-receive unit is provided in the smart phone 1 for relaying the challenge. In particular, when ECU challenges the signal-receive unit, the signal-receive unit relays the challenge to the NFC tag 2. Based on the challenge, the NFC tag 2 sends a response information to the signal-send unit. The response information corresponds to the challenge to answer the challenge so as to help ECU verify whether the identification information is correct. In present embodiment, the signal-receive unit and signal-send unit can be assembled as a module. The process of signal sending and signal receiving is isolated so that sending challenge, receiving challenge and verifying the identification information occupies a short period which will not delay the control.

An NFC base positioned on the vehicle is also provided in the vehicle control system. As mentioned before, when the battery of the smart phone runs out, users can not use phones to send control signal. Therefore the NFC base on the vehicle can communicate with smart phones directly through NFC tag 2 arranged on the smart phone 1. In one preferable embodiment, the NFC base is arranged in the door handle, B column or wind shield so that users can connect the NFC tag 2 with NFC base untouchably. After the communication between NFC tag 2 and NFC base is established, signals with identification information sent from the NFC tag 2 will be transferred to the NFC base. In particular, when users keep the smart phone 1 with NFC tag 2 on the door handle of a vehicle with the NFC base. The NFC base verifies that the smart phone 1 with NFC tag 2 is approaching and activate its NFC communication. After that, the NFC tag 2 send identification information to the NFC base through NFC. The NFC base receives and verifies the identification information. If the ID of the NFC tag 2 in the identification information has been stored in the NFC base, the NFC base will send the ID of NFC tag 2 and a query about opening switch to the ECU by CAN-BUS for accessing. The ECU defines the ID and query valid after receiving the ID and query, operates the vehicle to open the switch and produces a confirmation information for users such as the LED or scintillator emits light.

In the embodiment above, when ECU receive the ID and query, it can also challenge and respond the ID and query to assure that the received control signals are sent by the right NFC tag 2. In particular, the NFC base receives the ID and query through CAN-BUS and sends the ID and query to the NFC tag 2. The NFC tag 2 forms a response and send the response to the NFC base based on NFC. The NFC receives the response and sends the ID and response to ECU through CAN-BUS for verifying.

Based on the embodiment above, when the battery of the smart phone 1 runs out, users can still open switch or close switch with smart phones 1 with NFC tag 2. Compared with prior art, the operation can be done at any time. And it is known to all that every time the NFC tag 2 gets close to the NFC base to establish communication with it, the NFC base will charge the NFC tag 2 automatically. There is no need for users to worry about the problems of useless NFC tag 2.

In another embodiment, an LF radio interface is provided in the NFC tag 2. The LF radio interface is powered by the NFC antenna or by the smart phone 1 directly. The LF radio interface is used like radio code which can locate the smart phone 1 with the NFC tag 2 so that users can know about:
*①* the NFC tag 2 or the smart phone 1 is located inside the vehicle or outside the vehicle;
*②* the distance between the vehicle and the NFC tag 2 or the smart phone 1;
*③* the NFC tag 2 or the smart phone 1 is located in which side of the vehicle.
That means users can know about or even confirm the position of the NFC tag 2 relative to the vehicle by the LF radio interface of the NFC tag 2. The LF radio interface is powered by external battery or charged by a rechargeable battery. The rechargeable battery is charged by the NFC antenna regularly or powered by the NFC antenna directly. Therefore, the smart phone 1 with the NFC tag 2 can implement passive entry or passive run. And all the function of radio code can be implemented by the NFC tag 2 with the LF radio interface.

With the development of applications(APP) in the smart phones, users can install some relative applications to get the confirmation sent from ECU so as to get the vehicle status by the application. The information can also be displayed on the smart phone 1. Therefore, users can not only control the vehicle but also know about the latest status of the vehicle to get the alarm information in time.

The challenge and response process described before is replaced by other arrangement to ensure that ECU communicates with the right smart phone 1. In particular, the first time (or an indicated time) the right NFC tag 2 communicates with ECU by the smart phone 1, ECU stores the identification information and encrypted code of the NFC tag 2. When the smart phone 1 communicates with ECU again, ECU will check the received identification information and encrypted code with the stored identification information and encrypted code. Only when the result of check is identical, will the ECU control the vehicle according to the signals. Compared with the challenge and response process, the whole process is handled in ECU which saves time. However, one disadvantage is that the correction of the communication at the first time is unknown. Even like this, the safety between the vehicle and phones is improved.

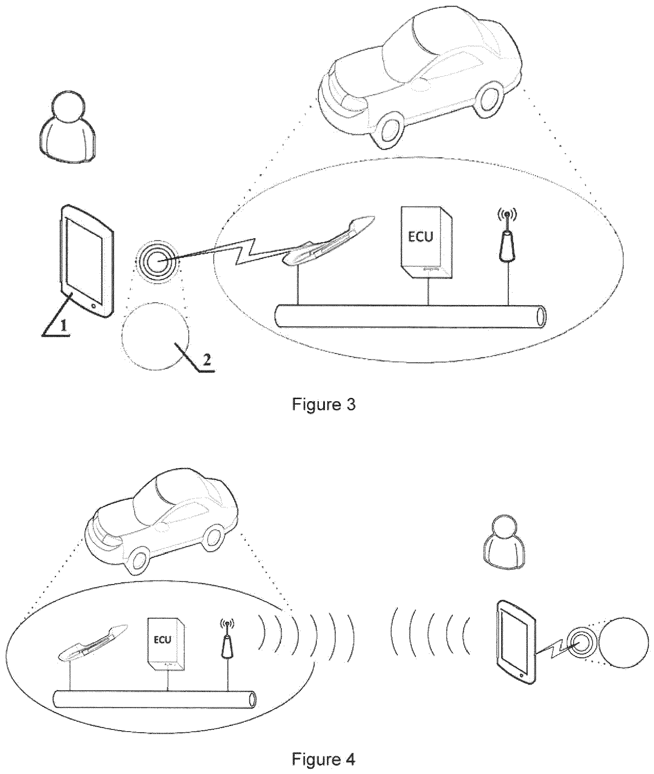

Figure 4 shows a operative diagram of the vehicle control system. The control method of the control system comprises following steps:
The smart phone 1 communicates with the attached NFC tag 2 by the NFC antenna of the smart phone 1 to get the identification information of the NFC tag 2; The NFC antenna transfer the received identification information to the signal-send unit so that the signals sent from the signal-send unit contain the identification information.
The signal-send unit communicates with ECU to send the signals with identification information to ECU.

The control method above is a simple process that the smart phone dispose the encrypt the signals by the NFC antenna and the NFC tag. Signals that ECU receives contains the identification information that added by the NFC tag.

In another embodiment, the control method comprises following steps:
ECU tag challenges the smart phone 1 after receiving the signals for verifying whether the identification information is correct;
The smart phone 1 relays the challenge to NFC tag 2;
The NFC tag 2 sends a response information to the smart phone 1 according to the challenge;
The smart phone 1 relays the response information to ECU;
ECU verifies the response information and operates according to the instructions if the response information is correct.

As described herein, the operation of the smart phone can be built based on the APPs of the smart phone. Users can send a query to ECU by an APP before the above steps are operated to explain the ID of the NFC tag and request ECU open the switches. ECU check the received ID and the stored ID. Only when the received ID and the stored ID matches, will ECU challenge the smart phone. That means users can manually start the process of challenge and response.

As described herein, the response information can contain the ID of the NFC tag to help ECU check the received ID and the stored ID.

The challenge and response process is described in detail below:
A. Users request opening the switches by the APP. The process can be implemented by operate the APP or its menu instructions;
B. The smart phone 1 sends a query through communication channels so that signals contain the ID of the NFC tag and the request;
C. The transceiver module of the vehicle checks the query and ID. If the ID is inquired, the query and ID is sent to ECU by CAN-BUS;
D. ECU receives the query and ID to form a challenge. The challenge is sent to the transceiver module together with the ID;
E. The transceiver module receives the challenge and ID through CAN-BUS and sends out through communication channels;
F. The smart phone 1 receives the challenge and ID and defines the ID as known;
G. The smart phone 1 communicates with the NFC tag 2 and send the challenge to the NFC tag 2;
H. The NFC tag 2 receives the challenge to form a response information and sends the response to the smart phone 1;
I. The smart phones receives the response by NFC and sends the response together with ID through communication channels;
J. The transceiver module receives the response and ID through communication channels and defines the ID as known. After that, the ID and response is sent to ECU;
K. ECU receives the ID and response and check the ID and response to define whether the ID and response is valid. If the ID and response is valid, ECU opens the switch according to the instructions and sends a confirmation to the transceiver module by CAN-BUS;
L. The transceiver module receives the ID and confirmation by CAN-BUS and transfers them to the smart phone 1 through communication channels;
M. The smart phone 1 receives the ID and confirmation and provides users with a feedback (such as vibration, sound or ball windows on the smart phone1)showing that the switch is open.

Tough the smart phone is attached with a NFC tag 2, the communication between external NFC tag 2 and the smart phone 1 is normal and the NFC tag 2 will not communicate with other NFC base. In particular, if the NFC tag 2 is positioned in the reading zone of other NFC bases, the other NFC bases will identify whether the NFC tag 2 is a NFC tag 2 to be read. Similarly, the NFC antenna of the smart phone 1 will identify external NFC tag 2.

As described herein, APP popularize itself in the smart phone 1. Users can implement control on the smart phone 1 or even more, establish the communication between the smart phones and vehicles by APP.

## Claims

1. A control system with a smart phone for a vehicle, the smart phone comprising NFC antenna and signal-send unit communicating with the NFC antenna, the control system comprising an ECU positioned in the vehicle and controlling the vehicle according to the received signal sent by the signal-send unit, wherein the smart phone further comprises an NFC tag which is assembled with the smart phone;
the NFC tag contains identification information;
the NFC tag communicates with the NFC antenna of the smart phone to send the identification information to the NFC antenna;
the NFC antenna is configured to transfer the identification information to the signal-send unit so that the signal sent by the signal-send unit contains the identification information through long range communication method ; the identification information comprises the ID or encryption information of the NFC tag.

2. The control system according to claim 1, wherein the identification information comprises the ID and encryption information of the NFC tag.

3. The control system according to claim 2, wherein
the smart phone further comprises an encrypted data storage encrypting the encryption information by AES.

4. The control system according to claim 1, wherein
the NFC tag is positioned in one of several places including: sticking onto the smart phone; integrated in the housing of the smart phone; on the battery of the smart phone; on a detachable protective shell cover.

5. The control system according to claim 1, wherein
a broken structure is provided on the NFC tag;
when the NFC tag is taken out of the smart phone, the structure is broken to ensure that the broken NFC tag can not be reused.

6. The control system according to claim 1, wherein
a switch is provided on the NFC tag to activate or deactivate the NFC tag.

7. The control system according to claim 1, wherein
the NFC tag stores the IMEI of the smart phone so that the NFC tag is activated only when the IMEI matches.

8. The control system according to claim 1, wherein the ECU communicates with the smart phone by GSM, Bluetooth or W-LAN.

9. The control system according to claim 1, wherein
the NFC tag comprising a mark of manufacture of the smart phone.

10. The control system according to any of claims 1 to 9, wherein
the ECU comprises a transceiver module to communicate with the smart phone.

11. The control system according to any of claims 1 to 9, wherein
the ECU sends a challenge to the smart phone;
the NFC tag sends a response corresponding to the challenge to the signal-send unit;
the signal-send unit sends the response to the ECU to verify the identification information.

12. The control system according to any of claims 1 to 9, wherein
the smart phone further comprises a signal receive unit for relaying the challenge to the NFC tag.

13. The control system according to any of claims 1 to 9, wherein
the control system further comprises an NFC base positioned on the vehicle to communicate with the ECU so as to transfer the received signal to the ECU;
the NFC tag communicates with the NFC base to send the signal to the NFC base.

14. The control system according to claim 13, wherein
the NFC base is positioned in the handle, B column or windshield.

15. The control system according to any of claims 1 to 9, wherein
a LF radio interface is provided on the NFC tag to determine the position of the NFC tag corresponding to the vehicle.

16. The control system according to claim 15, wherein
the LF radio interface is powered by the NFC antenna.

17. The control system according to any of claims 1 to 9, wherein
the smart phone shows the conditions of the vehicle according to the signal sent by the ECU.

18. The control system according any of claims 1 to 9, wherein
the ECU stores the identification information and encryption information of the NFC tag to identify the effective NFC tag.

19. A control method for operating the control system of any of claims 1 to 9, said control method comprising of the following steps:
the smart phone communicates with the NFC tag by NFC antenna to obtain the identification information;
the NFC antenna transfers the identification information to the signal-send unit;
the signal-send unit communicates with the ECU to send a signal containing the identification information to ECU.

20. The control method according to claim 19, further comprising the following steps:
ECU sends a challenge to the smart phone;
the smart phone relays the challenge to the NFC tag;
the NFC tag sends a response corresponding to the challenge to the smart phone;
the smart phone relays the response to ECU;
the ECU executes the operation when the response is verified.

21. The control method of claim 20, comprising the following step:
the smart phone sends an inquiry to the ECU.

22. The method of claim 20, wherein
the NFC tag integrates the ID of the NFC tag into the response.

## Patentansprüche

1. Steuerungssystem mit einem Smartphone für ein Fahrzeug, wobei das Smartphone eine NFC-Antenne und eine Signalsendeeinheit aufweist, die mit der NFC-Antenne kommuniziert, wobei das Steuerungssystem eine ECU aufweist, die in dem Fahrzeug angeordnet ist und das Fahrzeug entsprechend dem empfangenen Signal steuert, das von der Signalsendeeinheit gesendet wird, wobei das Smartphone darüber hinaus ein NFC-Tag aufweist, das mit dem Smartphone verbaut ist;
wobei das NFC-Tag Identifikationsinformationen enthält;
wobei das NFC-Tag mit der NFC-Antenne des Smartphones kommuniziert, um die Identifikationsinformationen an die NFC-Antenne zu senden;
wobei die NFC-Antenne dazu ausgelegt ist, die Identifikationsinformationen an die Signalsendeeinheit zu übermitteln, so dass das von der Signalsendeeinheit gesendete Signal die Identifikationsinformationen durch ein Weitbereichs-Kommunikationsverfahren enthält;
wobei die Identifikationsinformationen die ID oder Verschlüsselungsinformationen des NFC-Tags enthalten.

2. Steuerungssystem nach Anspruch 1, wobei die Identifikationsinformationen die ID und Verschlüsselungsinformationen des NFC-Tags enthalten.

3. Steuerungssystem nach Anspruch 2, wobei
das Smartphone darüber hinaus einen Speicher für verschlüsselte Daten aufweist, der die Verschlüsselungsinformationen durch AES verschlüsselt.

4. Steuerungssystem nach Anspruch 1, wobei
das NFC-Tag an einem von mehreren Orten angeordnet ist, darunter: Aufkleben auf das Smartphone; integriert in das Gehäuse des Smartphones; auf dem Akku des Smartphones; auf einer abnehmbaren Schutzhüllenabdeckung.

5. Steuerungssystem nach Anspruch 1, wobei
eine zerbrochene Struktur an dem NFC-Tag vorgesehen ist;
wobei, wenn das NFC-Tag aus dem Smartphone herausgenommen wird, die Struktur zerbricht, um sicherzustellen, dass das zerbrochene NFC-Tag nicht wiederverwendet werden kann.

6. Steuerungssystem nach Anspruch 1, wobei
ein Schalter am NFC-Tag vorgesehen ist, um das NFC-Tag zu aktivieren oder zu deaktivieren.

7. Steuerungssystem nach Anspruch 1, wobei
im NFC-Tag die IMEI des Smartphones gespeichert ist, so dass das NFC-Tag nur dann aktiviert wird, wenn die IMEI passt.

8. Steuerungssystem nach Anspruch 1, wobei
die ECU mit dem Smartphone über GSM, Bluetooth oder W-LAN kommuniziert.

9. Steuerungssystem nach Anspruch 1, wobei
das NFC-Tag ein Fertigungskennzeichen des Smartphones aufweist.

10. Steuerungssystem nach einem der Ansprüche 1 bis 9, wobei
die ECU ein Sender-Empfänger-Modul zur Kommunikation mit dem Smartphone aufweist.

11. Steuerungssystem nach einem der Ansprüche 1 bis 9, wobei
die ECU eine Aufforderung an das Smartphone sendet;
das NFC-Tag eine der Aufforderung entsprechende Antwort an die Signalsendeeinheit sendet;
die Signalsendeeinheit die Antwort an die ECU sendet, um die Identifikationsinformationen zu verifizieren.

12. Steuerungssystem nach einem der Ansprüche 1 bis 9, wobei
das Smartphone darüber hinaus eine Signalempfangseinheit zum Weiterleiten der Aufforderung an das NFC-Tag aufweist.

13. Steuerungssystem nach einem der Ansprüche 1 bis 9, wobei
das Steuerungssystem darüber hinaus eine am Fahrzeug angeordnete NFC-Basis zur Kommunikation mit der ECU aufweist, um das empfangene Signal an die ECU zu übermitteln;
das NFC-Tag mit der NFC-Basis kommuniziert, um das Signal an die NFC-Basis zu senden.

14. Steuerungssystem nach Anspruch 13, wobei
die NFC-Basis am Türgriff, in der B-Säule oder an der Windschutzscheibe angeordnet ist.

15. Steuerungssystem nach einem der Ansprüche 1 bis 9, wobei
eine NF-Funkschnittstelle am NFC-Tag vorgesehen ist, um die dem Fahrzeug entsprechende Position des NFC-Tags zu bestimmen.

16. Steuerungssystem nach Anspruch 15, wobei
die NF-Funkschnittstelle von der NFC-Antenne mit Energie versorgt wird.

17. Steuerungssystem nach einem der Ansprüche 1 bis 9, wobei
das Smartphone die Zustände des Fahrzeugs entsprechend dem durch die ECU gesendeten Signal anzeigt.

18. Steuerungssystem nach einem der Ansprüche 1 bis 9, wobei
in der ECU die Identifikationsinformationen und die Verschlüsselungsinformationen des NFC-Tags gespeichert sind, um das wahre NFC-Tag zu identifizieren.

19. Steuerungsverfahren zum Betreiben des Steuerungssystems nach einem der Ansprüche 1 bis 9, wobei das Steuerungsverfahren die folgenden Schritte umfasst:
das Smartphone kommuniziert mit dem NFC-Tag über die NFC-Antenne, um die Identifikationsinformationen zu erhalten;
die NFC-Antenne übermittelt die Identifikationsinformationen an die Signalsendeeinheit;
die Signalsendeeinheit kommuniziert mit der ECU, um ein die Identifikationsinformationen enthaltendes Signal an die ECU zu senden.

20. Steuerungsverfahren nach Anspruch 19, darüber hinaus die folgenden Schritte umfassend:
die ECU sendet eine Aufforderung an das Smartphone;
das Smartphone leitet die Aufforderung an das NFC-Tag weiter;
das NFC-Tag sendet eine der Aufforderung entsprechende Antwort an das Smartphone;
das Smartphone leitet die Antwort an die ECU weiter;
die ECU führt den Betrieb aus, wenn die Antwort verifiziert ist.

21. Steuerungsverfahren nach Anspruch 20, den folgenden Schritt umfassend:
das Smartphone sendet eine Anfrage an die ECU.

22. Verfahren nach Anspruch 20, wobei
das NFC-Tag die ID des NFC-Tags in die Antwort integriert.

## Revendications

1. Système de commande avec un mobile multifonction pour un véhicule, le mobile multifonction comprenant :
l'antenne NFC et l'unité d'envoi de signal communiquant avec l'antenne NFC, le système de commande comprenant une unité ECU positionnée dans le véhicule et commandant le véhicule en fonction du signal reçu envoyé par l'unité d'envoi de signal, dans lequel le mobile multifonction comprend en outre une balise NFC qui est assemblée avec le mobile multifonction ;
la balise NFC contient les informations d'identification ;
la balise NFC communique avec l'antenne NFC du mobile multifonction pour envoyer les informations d'identification à l'antenne NFC ;
l'antenne NFC est configurée pour transférer les informations d'identification à l'unité d'envoi de signal de sorte que le signal envoyé par l'unité d'envoi de signal contienne les informations d'identification à travers le procédé de communication à longue portée ;
les informations d'identification comprennent les informations d'identification et de cryptage de la balise NFC.

2. Système de commande selon la revendication 1, dans lequel les informations d'identification comprennent les informations d'identification et de cryptage de la balise NFC.

3. Système de commande selon la revendication 2, dans lequel le mobile multifonction comprend en outre une mémoire de données cryptée cryptant les informations de cryptage par AES.

4. Système de commande selon la revendication 1, dans lequel la balise NFC est positionnée dans un emplacement parmi plusieurs comprenant : collé sur le mobile multifonction ; intégré dans le carter du mobile multifonction ; sur la batterie du mobile multifonction ; sur un cache de coque de protection amovible.

5. Système de commande selon la revendication 1, dans lequel :
une structure brisée est prévue sur la balise NFC ;
lorsque la balise NFC est sortie du mobile multifonction, la structure est brisée pour s'assurer que la balise NFC ne peut pas être réutilisée.

6. Système de commande selon la revendication 1, dans lequel un interrupteur est prévu sur la balise NFC pour activer ou désactiver la balise NFC.

7. Système de commande selon la revendication 1, dans lequel la balise NFC mémorise l'IMEI du mobile multifonction de sorte que la balise NFC est activée uniquement lorsque l'IMEI est le bon.

8. Système de commande selon la revendication 1, dans lequel l'ECU communique avec le mobile multifonction par GSM, Bluetooth ou WLAN.

9. Système de commande selon la revendication 1, dans lequel la balise NFC comprend une marque de fabrication du mobile multifonction.

10. Système de commande selon l'une quelconque des revendications 1 à 9, dans lequel l'ECU comprend un module émetteur-récepteur pour communiquer avec le mobile multifonction.

11. Système de commande selon l'une quelconque des revendications 1 à 9, dans lequel :
l'ECU envoie un défi au mobile multifonction ;
la balise NFC envoie une réponse correspondant au défi à l'unité d'envoi de signal ;
l'unité d'envoi de signal envoie la réponse à l'ECU pour vérifier les informations d'identification.

12. Système de commande selon l'une quelconque des revendications 1 à 9, dans lequel le mobile multifonction comprend en outre une unité de réception de signal pour relayer le défi à la balise NFC.

13. Système de commande selon l'une quelconque des revendications 1 à 9, dans lequel :
le système de commande comprend en outre une base NFC positionnée sur le véhicule pour communiquer avec l'ECU de façon à transférer le signal reçu à l'ECU ;
la balise NFC communique avec la base NFC pour envoyer le signal à la base NFC.

14. Système de commande selon la revendication 13, dans lequel la base NFC est positionnée dans la poignée, le montant B ou le pare-brise.

15. Système de commande selon l'une quelconque des revendications 1 à 9, dans lequel une interface radio LF est prévue sur la balise NFC pour déterminer la position de la balise NFC correspondant au véhicule.

16. Système de commande selon la revendication 15, dans lequel l'interface radio LF est alimentée en courant par l'antenne NFC.

17. Système de commande selon l'une quelconque des revendications 1 à 9, dans lequel le mobile multifonction indique les différents états du véhicule en fonction du signal envoyé par l'ECU.

18. Système de commande selon l'une quelconque des revendications 1 à 9, dans lequel l'ECU mémorise les informations d'identification et les informations de cryptage de la balise NFC pour identifier la balise NFC valide.

19. Procédé de commande pour exploiter le système de commande selon l'une quelconque des revendications 1 à 9, ledit procédé de commande comprenant les étapes suivantes :
le mobile multifonction communique avec la balise NFC par le biais de l'antenne NFC pour obtenir les informations d'identification ;
l'antenne NFC transfère les informations d'identification à l'unité d'envoi de signal ;
l'unité d'envoi de signal communique avec l'ECU pour envoyer un signal contenant les informations d'identification à l'ECU.

20. Procédé de commande selon la revendication 19, comprenant en outre les étapes suivantes :
l'ECU envoie un défi au mobile multifonction ;
le mobile multifonction relaie le défi à la balise NFC ;
la balise NFC envoie une réponse correspondant au défi au mobile multifonction ;
le mobile multifonction relaie la réponse à l'ECU ;
l'ECU exécute l'opération lorsque la réponse est vérifiée.

21. Procédé de commande selon la revendication 20, comprenant l'étape suivante :
le mobile multifonction envoie une demande à l'ECU.

22. Procédé selon la revendication 20, dans lequel la balise NFC intègre l'ID de la balise NFC dans la réponse.
